# EUROPEAN PATENT APPLICATION

(11) **EP 2 360 760 A1**
(43) Date of publication of application: **24.08.2011**
(21) Application number: 09833299.2
(22) Date of filing: 10.11.2009
(51) Int. Cl.: H01M 4/96, H01M 8/10

(54) **ANODE CATALYST LAYER FOR SOLID POLYMER FUEL CELL**

(30) Priority: 16.12.2008 JP 2008320144
(71) Applicant: Cataler Corporation, Shizuoka 437-1492 (JP)
(72) Inventor: ENDOH, Nami, Toyota-shi Aichi 471-8571 (JP); OHASHI, Sozaburo, Toyota-shi Aichi 471-8571 (JP); NAGAMI, Tetsuo, Toyota-shi Aichi 471-8571 (JP); TABATA, Toshiharu, Kakegawa-shi Shizuoka 437-1492 (JP); ISHIDA, Tomohiro, Kakegawa-shi Shizuoka 437-1492 (JP); KATAOKA, Mikihiro, Kakegawa-shi Shizuoka 437-1492 (JP)
(74) Representative: Woods, Geoffrey Corlett
(86) International application number: PCT/JP2009/069074
(87) International publication number: WO 2010/070994

(57) **Abstract**

An object of the present invention is to optimize an anode catalyst layer such that high output performance can be achieved even under low-humidity conditions. In addition, another object of the present invention is to provide a polymer electrolyte fuel cell having such an anode catalyst layer.

The following is obtained: an anode catalyst layer for a polymer electrolyte fuel cell, which comprises a carbon support on which a catalyst is carried and a hydrogen ion-conductive polyelectrolyte, and wherin the catalyst is carried by a carbon support for which the hydrophilic characteristic value specified based on a value representing the amount of adsorbed water vapor/the amount of adsorbed nitrogen is 0.02 or less, or the hydrophilic characteristic value for the catalyst-carrying carbon support is 0.30 or less.

## Description

### Technical Field

The present invention relates to a catalyst layer for an anode of a polymer electrolyte fuel cell.

### Background Art

A polymer electrolyte fuel cell, which comprises a hydrogen ion-conducting solid polymer electrolyte membrane with a pair of electrodes provided on each side of the membrane, obtains electromotive force by supplying hydrogen gas to one of the electrodes (fuel electrode: anode) as fuel gas, and supplying oxygen gas or air to the other electrode (air electrode: cathode) as an oxidant. In addition to obtaining such high cell performance, since the cell can easily be made smaller and lighter, polymer electrolyte fuel cells hold promise for practical use as a power source in mobile vehicles such as electric automobiles and in small cogeneration systems and the like.

Usually, a gas diffusion electrode used in a polymer electrolyte fuel cell is composed of a catalyst layer containing a catalyst-carrying carbon support coated with a hydrogen-ion-conductive polyelectrolyte and a gas diffusion layer which feeds a reaction gas to the catalyst layer and collects electrons. Voids composed of fine pores formed among the secondary particles or the tertiary particles of the carbon are present in the catalyst layer. These voids function as a diffusion flow path for the reaction gas.

A precious metal such as platinum or platinum alloy has been used as cathode and anode catalysts to be carried on carbon supports. For instance, a platinum-carrying carbon support is prepared by adding sodium bisulfite to a chloroplatinic acid solution, reacting the resulting mixture with a hydrogen peroxide solution, allowing a support such as carbon black to carry the formed platinum colloid, and carrying out washing and, if necessary, heat treating. An electrode is produced by dispersing a platinum-carrying carbon support in a hydrogen-ion-conductive polymer electrolyte solution to prepare an ink, applying this ink to a gas diffusion substrate such as carbon paper, and drying. An electrolyte membrane-electrode assembly (MEA) is assembled by sandwiching a polymer electrolyte membrane between two these electrodes and hot-pressing.

In general, ion-exchange resins such as perfluorosulfonic acid polymers are used for solid polymer electrolyte membranes. Such ion-exchange resins can exhibit high degrees of hydrogen ion conductivity only in moist environments. This is presumably because hydrogen ion transfer essentially requires the mediation or involvement of water molecules. Therefore, hitherto, in order to operate fuel cells with good efficiency, the moist state of a polymer electrolyte membrane has been continuously maintained by supplying water vapor with a reaction gas to a catalyst layer. However, in order to achieve such moist state, it is necessary to separately provide a humidifier to an air supply channel or a hydrogen supply channel. This results in fuel cell size expansion and production cost increase, which have been disadvantageous. Accordingly, the development of a technique for allowing fuel cell operation under low-humidity conditions has been awaited.

Normally, mass transfer resistance of oxygen or hydrogen ion increases in an MEA under low-humidity conditions, resulting in reduction of fuel cell output performance. In order to solve this problem, a technique for improveing fuel cell output performance by incresing the hydrophilicity of a cathode catalyst layer has been conventionoally suggested. For instance, Patent Document 1 discloses a fuel cell in which a carbon material (carbon support) contained in a catalyst layer comprises a carbon material used as a catalyst support, on which a catalyst component is carried, and a carbon material used for gas diffusion, on which a catalyst component is not carried, provided that the carbon material used for gas diffusion comprises at least two different carbon materials such as a carbon material A for which the amount of adsorbed water vapor at 25°C at a relative humidity of 90% is 50 ml/g or less and a carbon material B for which the same is 100 ml/g or more. With the use of such fuel cell, obstruction of the gas diffusion path with condensed water can be prevented, and at the same time, the moist state of a polyelectrolyte contained in a cathode catalyst layer can be continuously maintained under low-humidity conditions. However, the above conventional technique has not been examined in terms of the influence of the hydrophilicity of an anode catalyst layer corresponding to the opposite electrode of the cathode. Therefore, the obtained overall output performance becomes insufficient.

As an example of a fuel cell that has been examined regarding the hydrophilicity of an anode catalyst layer, Patent Document 2 discloses a polymer electrolyte fuel cell characterized as follows: the amount of adsorbed water A at 60°C under saturated water vapor pressure falls within the range of A ≥ 150 cc/g for carbon black particles serving as supports contained in anode and cathode catalyst layers; and when "Wp" denotes the composition weight of a polyelectrolyte contained in a catalyst layer and "Wc" denotes the composition weight of carbon black particles, the value Wp/Wc falls within the range of 0.4 ≤ Wp/Wc ≤ 1.25. However, when the degree of hydrophilicity of an anode catalyst layer is increased as described above, water in a cathode catalyst layer is transferred through a polymer electrolyte membrane, and thus water adsorption takes place on the anode side. This results in the creation of a dry environment on the cathode side, which is unfavorable. As a result, there is concern that output performance would decrease, particularly under low-humidity conditions.
Patent Document 1: JP Patent Publication (Kokai) No. 2008-159519 A
Patent Document 2: JP Patent Publication (Kokai) No. 2002-100367 A

### Disclosure of the Invention

### Problem to be Solved by the Invention

In view of the above, an object of the present invention is to optimize an anode catalyst layer such that high output performance can be achieved even under low-humidity conditions. In addition, another object of the present invention is to provide a polymer electrolyte fuel cell having such an anode catalyst layer.

### Means for Solving Problem

The present inventors found that the above object can be achieved by determining the value representing the amount of adsorbed water vapor/the amount of adsorbed nitrogen for a carbon support contained in an anode catalyst layer or a carbon support on which a catalyst is carried and, contrary to conventional findings, making such carbon support hydrophobic so as to adjust the value to a predetermined level or lower. This has led to the completion of the present invention. Specifically, the present invention is summarized as follows.

(1) An anode catalyst layer for a polymer electrolyte fuel cell, which comprises a carbon support on which a catalyst is carried and a hydrogen ion-conductive polyelectrolyte, and wherin the catalyst is carried by a carbon support for which the hydrophilic characteristic value specified based on a value representing the amount of adsorbed water vapor/the amount of adsorbed nitrogen is 0.02 or less.

(2) An anode catalyst layer for a polymer electrolyte fuel cell, which comprises a carbon support on which a catalyst is carried and a hydrogen ion-conductive polyelectrolyte, and wherin the hydrophilic characteristic value specified based on a value representing the amount of adsorbed water vapor/the amount of adsorbed nitrogen is 0.30 or less for the carbon support on which a catalyst is carried.

(3) The anode catalyst layer according to (1) or (2), wherein the carbon support on which a catalyst is to be carried is subjected to heat treatment at 800°C to 950°C.

(4) A polymer electrolyte fuel cell having the anode catalyst layer according to any one of (1) to (3).

This description includes part or all of the contents as disclosed in the description and/or drawings of Japanese Patent Application No. 2008-320144, which is a priority document of the present application.

### Effects of the Invention

According to the present invention, a high-performance polymer electrolyte fuel cell comprising an anode catalyst layer having optimized hydrophilicity and thus exhibiting high output under low-humidity conditions can be obtained.

### Brief Description of the Drawings

Fig. 1 is a graph showing the relationship between the voltage and the hydrophilic characteristic value of a carbon support.
Fig. 2 is a graph showing the relationship between the voltage and the hydrophilic characteristic value of a Pt-carrying carbon support.

### Best Mode for Carrying Out the Invention

The present invention is described in detail below.

The anode catalyst layer of the present invention comprises a carbon support on which a catalyst is carried and a hydrogen ion-conductive polyelectrolyte.

A carbon support on which a catalyst is to be carried is not particularly limited. However, a carbon support preferably has a specific surface area of 200 m²/g or more. In general, carbon black is used. In addition, graphite, carbon fibers, activated carbon, carbon nanotubes, or the like can be used. Preferable examples thereof include Ketjen EC (KetjenBlack International) and Vulcan (Cabot).

In addition, examples of a catalyst that is carried by a carbon support include: a metal such as platinum, cobalt, palladium, ruthenium, gold, rhodium, osmium, or iridium; an alloy comprising at least two types of such metals; a complex of a metal and an organic compound or an inorganic compound; and a metal oxide.

The anode catalyst layer of the present invention is characterized in that the hydrophilic characteristic value specified based on the amount of adsorbed water vapor/the amount of adsorbed nitrogen for a carbon support is 0.02 or less and preferably 0.005 to 0.02, or that the hydrophilic characteristic value for a carbon support on which a catalyst is carried is 0.30 or less and preferably 0.05 to 0.30. Here, the amount of adsorbed water vapor is defined as the amount of adsorbed water vapor (unit: cm³ (STP)/g-cat) at a relative pressure of 0.5 obtained by subjecting a sample to vacuum deaeration at 120°C for 8 hours and determining the water vapor adsorption isothermal line (or the adsorption/desorption isothermal line) by a constant volume method at an adsorption temperature of 323.15 K and a saturated vapor pressure of 12.344 kPa. In addition, the amount of adsorbed nitrogen is defined as the amount of adsorbed nitrogen (unit: cm³ (STP)/g-cat) at a relative pressure of 0.5 obtained by subjecting a sample to pretreatment involving vacuum deaeration at 120°C for 8 hours and determining the nitrogen adsorption isothermal line by a constant volume method. For determinaiton of the nitrogen adsorption isothermal line, the adsorption temperature is 77 K and the saturated vapor pressure is obtained by measurement.

The particle size of a carbon support, the amount of a catalyst carried by a carbon support, and the like are not limited, and they can be adequately determined such that the hydrophilic characteristic value for a carbon support becomes 0.02 or less or the hydrophilic characteristic value for a catalyst-carrying carbon support becomes 0.30 or less, as described above. In particular, when a carbon support is subjected to heat treatment at 800°C to 1200°C and preferably 800°C to 950°C in an inert argon, nitrogen, helium, or vacuum atmosphere, for example, the hydrophilic characteristic value for a carbon support can be adjusted to 0.02 or less or the hydrophilic characteristic value for a catalyst-carrying carbon support can be adjusted to 0.30 or less. In such case, the heat treatment time is not limited; however, it is preferably 1 to 5 hours. As described above, when the hydrophilic characteristic value for a carbon support or a catalyst-carrying carbon support is adjusted to a predetermined value or less, it is possible to prevent moisture contained in a cathode catalyst layer from being adsorbed on the anode side so as to continuously maintain the moist conditions on the cathode side. As a result, high output performance can be obtained even under low-humidity conditions of approximately 20% to 60% RH.

A carbon support is allowed to carry a catalyst using a conventional method. Specifically, for instance, a catalyst is deposited on a carbon support by suspending a carbon support in water or the like and adding dropwise a catalyst metal compound such as chloroplatinic acid and a reductant in such order. In a case in which a carbon support is allowed to carry an alloy, a different metal is additionally deposited on a carbon support, followed by heat treatment for alloying. After heat treatment, washing with the use of acid is preferably carried out in order to remove a metal portion that has not been alloyed. At such time, conditions including the following conditions are adequately determined depending on the catalyst type, etc.: heat treatment temperature; heat treatment time; acid concentration upon acid washing; washing time; and washing temperature. In general, the following conditions are preferable: heat treatment temperature: 600°C to 1000°C; heat treatment time: 0.5 to 5 hours; acid concentration: 0.5 to 5 mol/l; washing time: 0.5 to 50 hours; and washing temperature: approximately 80°C to 95°C.

As a hydrogen ion-conductive polyelectrolyte used for an anode catalyst layer, a fluorine-containing ion-exchange resin or the like can be used. In particular, a sulfonic-acid-type perfluorocarbon polymer is preferably used. A preferable example is Nafion (DuPont).

An anode catalyst layer is formed in the manner described below. First, a carbon support on which a catalyst is carried and a hydrogen ion-conductive polyelectrolyte are added to a solvent, followed by dispersion treatment via ultrasonic irradiation, bead milling, or the like. Thus, a coating liquid (ink) is prepared. Examples of a solvent that can be used herein include: alcohols such as ethanol, ethylene glycol, and propylene glycol; fluorine-containing alcohols; and fluorine-containing ethers. In addition, the proportion at which a hydrogen ion-conductive polyelectrolyte is mixed with a catalyst-carrying carbon powder is not particularly limited. In general, the value reprersenting the amount of a hydrogen ion-conductive polyelectrolyte/the amount of a catalyst-carrying carbon support (weight proportion) is 0.5 to 1.5.

Then, the coating liquid is applied to a polymer electrolyte membrane or a gas diffusion layer for a fuel cell and the coat is dried. Thus, an anode catalyst layer can be formed. Alternatively, an anode catalyst layer may be formed on a polyelectrolyte in the following manner. The coating liquid is applied to a separately prepared base material, followed by drying. The dried coat is transferred to a polymer electrolyte membrane. Here, examples of a coating means that can be adequately used include brush coating, spraying, roll coating, ink-jet printing, and screen printing.

A cathode catalyst layer can be formed by a conventional method. For example, as in the above case of an anode catalyst layer, a cathode catalyst layer can be formed by preparing a coating liquid containing a catalyst-carrying carbon support and a hydrogen ion-conductive polyelectrolyte, applying the coating liquid to a polymer electrolyte membrane or gas diffusion layer of a fuel cell, and drying the coat. Note that, unlike in the case of the anode catalyst layer of the present invention, it is generally preferable for a carbon support (or catalyst-carrying carbon support) for a cathode catalyst layer to have a high degree of hydrophilicity.

The catalyst layer thickness of a cathode or anode of a fuel cell can be adequately determined. In general, it is 1 to 10 µm and preferably 3 to 5 µm.

When an anode catalyst layer and a cathode catalyst layer are formed on a gas diffusion layer, a membrane electrode assembly (MEA) can be assembled by bonding each catalyst layer to a polymer electrolyte membrane via adhesion, hot pressing, or the like. In addition, when each catalyst layer is formed on a polymer electrolyte membrane, catalyst layers alone may serve as an anode and a cathode. Further, a gas diffusion layer is adjoined to each catalyst layer. Thus, catalyst layers each adjoined to a gas diffusion layer may serve as an anode and a cathode.

As a material for a polymer electrolyte membrane sandwiched between a cathode catalyst layer and an anode catalyst layer, any material can be used as long as it has favorable hydrogen ion conductivity under moist conditions. For instance, examples of such material include a perfluorocarbon polymer having a sulfonic acid group, a polysulfone resin, and a perfluorocarbon polymer having a phosphonic acid group or a carboxylic acid group. Particularly preferably, a sulfonic acid-type perfluorocarbon polymer is used. In addition, such polymer electrolyte membrane may be composed of a resin identical to or different from the resin used for a hydrogen ion-conductive polyelectrolyte contained in a catalyst layer.

A gas diffusion layer can be composed of a variety of materials, as long as it allows a gas to uniformly diffuse from a gas channel formed in a separator to a catalyst layer and has a function of causing electron conduction between a catalyst and a separator. In general, a carbon material such as carbon cloth or carbon paper is used. Also, a metal material such as metal mesh or metal wool can be used as long as it has corrosion resistance, in addition to gas diffusivity and electroconductivity.

In general, separators in each of which a gas channnel is formed are provided outside an anode and a cathode. Thus, the polymer electrolyte fuel cell of the present invention is produced. A gas containing hydrogen is supplied to a channel in a separator on the anode side and a gas containing oxygen or air is supplied to that on the cathode side for power generation.

### Examples

The present invention is hereafter described in greater detail with reference to the following examples and comparative examples, although the technical scope of the present invention is not limited thereto.

### <Determination of the amount of adsorbed nitrogen in a carbon support>

Carbon black products (1) to (4) described below were used as carbon supports. The carbon supports were weighed (approximately 50 mg each) and subjected to vacuum deaeration at 120°C for 8 hours. Subsequently, nitrogen adsorption isothermal lines were determined using a BELSORP-mini (BEL Japan, Inc.) by a constant volume method. The temperature was determined to be 77K.

(1) Ketjen EC (product name) (KetjenBlack International)
(2) Ketjen EC subjected to heat treatment at 700°C for 2 hours in an argon atmosphere
(3) Ketjen EC subjected to heat treatment at 900°C for 2 hours in an argon atmosphere
(4) Denka Black (product name) (Denki Kagaku Kogyo Kabushiki Kaisha)

### <Determination of the amount of adsorbed water vapor in a carbon support>

The above carbon supports (1) to (4) were weighed (approximately 50 mg each) and subjected to vacuum deaeration at 120°C for 8 hours. Subsequently, water vapor adsorption/desorption isothermal lines were determined using a BELSORP-mini (BEL Japan, Inc.) by a constant volume method. The temperature was determined to be 323.15K.

### <Calculation of the hydrophilic characteristic values for carbon supports>

The amounts of adsorption at a relative pressure of 0.5 were obtained based on the nitrogen adsorption isothermal lines and the water vapor adsorption/desorption isothermal lines for the carbon supports. Then, the amount of adsorbed water vapor/the amount of adsorbed nitrogen was calculated for each carbon support and the obtained value was designated as the hydrophilic characteristic value.

### <Production of Pt-carrying carbon supports>

The 4 above types of carbon supports were separately suspended in distilled water. Chloroplatinic acid was added dropwise thereto. Next, ethanol serving as a reductant was added dropwise thereto. Thus, Pt was deposited on each carbon support. Each mixture was filtered and the resulting solid product was dried. Accordingly, Pt-carrying carbon supports were obtained.

### <Determination of the amount of adsorbed nitrogen in a Pt-carrying carbon support >

The 4 above types of Pt-carrying carbon supports were weighed (approximately 50 mg each) and subjected to vacuum deaeration at 120°C for 8 hours. Subsequently, nitrogen adsorption isothermal lines were determined using a BELSORP-mini (BEL Japan, Inc.) by a constant volume method. The temperature was determined to be 77K.

### <Determination of the amount of adsorbed water vapor in a Pt-carrying carbon support >

The 4 above types of Pt-carrying carbon supports were weighed (approximately 50 mg each) and subjected to vacuum deaeration at 120°C for 8 hours. Subsequently, water vapor adsorption/desorption isothermal lines were determined using a BELSORP-mini (BEL Japan, Inc.) by a constant volume method. The temperature was determined to be 323.15K.

### <Calculation of the hydrophilic characteristic values for Pt-carrying carbon supports>

The amount of adsorption at a relative pressure-of 0.5 was obtained based on the nitrogen adsorption isothermal line and the water vaporadsorption desorption isothermal line for a Pt-carrying carbon support. Then, the amount of adsorbed water vapor/the amount of adsorbed nitrogen was calculated for each Pt-carrying carbon support and the obtained value was designated as the hydrophilic characteristic value.

### <Production of an anode catalyst layer>

Distilled water was added to each of the 4 above types of Pt-carrying carbon supports. Then, ethanol was added thereto, and Nafion (product name; DuPont) serving as a hydrogen ion-conductive polyelectrolyte was further added thereto. The weight ratio of a carbon support to a hydrogen ion-conductive polyelectrolyte was determined to be 1:1. Each mixture was sufficiently stirred. For fine particle formation and uniform dispersion of particles, dispersion treatment was carried out using an ultrasonic homogenizer. Ink obtained after dispersion was applied to an electrolyte membrane comprising Nafion and dried. Thus, an anode catalyst layer was obtained. The content of platinum in the anode catalyst layer was 0.05 mg/cm².

### <Fuel cell performance evaluation>

A cathode catalyst layer comprising a Pt-carrying carbon support and a hydrogen ion-conductive polyelectrolyte was formed on one side of each electrolyte membrane opposite to the side on which an anode catalyst layer had been formed. Thus, membrane electrode assemblies (MEAs) were produced. The amount of Pt in a Pt-carrying carbon support in a cathode catalyst layer was determined to be 50 weight %. Coating was carried out in a manner such that the amount of Pt on an electrolyte membrane became 0.2 mg/cm² Next, a gas diffusion layer (GDL) composed of a carbon base material and a water-repellent layer (carbon + PTFE) was provided outside each prepared MEA. Hydrogen was supplied to the anode side and air was supplied to the cathode side for power generation. Fuel cell performance was evaluated at at a voltage value corresponding to a load current of 1.0 A/cm². The humidy was determined to be 40%RH at cell temperature.

### <Determination results>

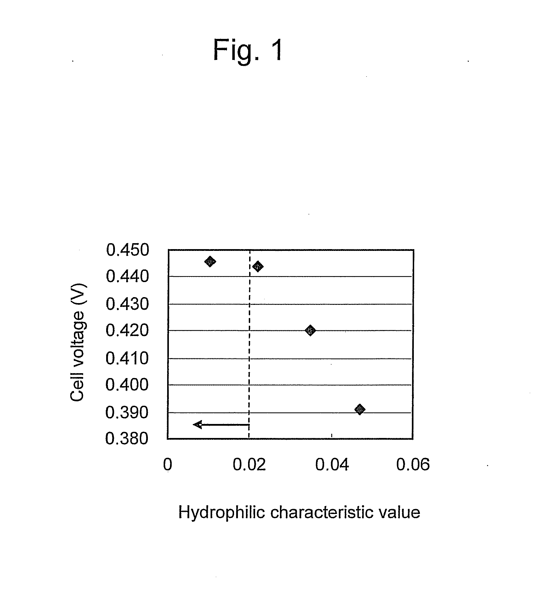

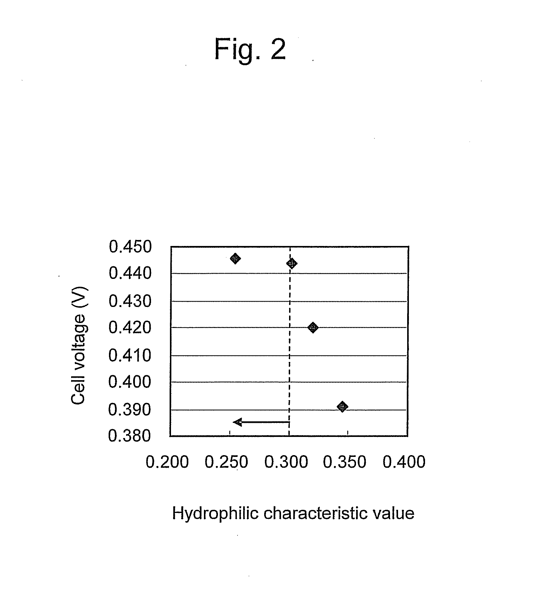

Table 1 and figs. 1 and 2 each show the results of determination of the hydrophilic characteristic value and the cell voltage. As is apparant from figs. 1 and 2, the voltage value increased when the hydrophilic characteristic value for a carbon support and that for a Pt-carrying carbon support decreased, resulting in the improvement of output performance. High voltage values were obtained at a hydrophilic characteristic value for a carbon support of 0.02 or less. In addition, high voltabe values were obtained at a hydrophilic characteristic value for a Pt-carrying carbon support of 0.30 or less. The results revealed that a fuel cell that exhibits high performance under low-humidity conditions can be obtained using an anode catalyst layer for which the hydrophilic characteristic value of a carbon support is 0.02 or less or the hydrophilic characteristic value of a catalyst-carrying carbon support is 0.30 or less. In addition, the optimum heat treatment of a carbon support was found to be 900°C.

**[Table 1]**

| Carbon support | Hydrophilic characteristic value for a carbon support | Hydrophilic characteristic value for a Pt-carrying carbon support | Voltage (V) |
|---|---|---|---|
| (1) | 0.047 | 0.345 | 0.391 |
| (2) | 0.035 | 0.320 | 0.420 |
| (3) | 0.010 | 0.254 | 0.446 |
| (4) | 0.022 | 0.302 | 0.444 |

All publications, patents, and patent applications cited herein are incorporated herein by reference in their entirety.

## Claims

1. An anode catalyst layer for a polymer electrolyte fuel cell, which comprises a carbon support on which a catalyst is carried and a hydrogen ion-conductive polyelectrolyte, and wherin the catalyst is carried by a carbon support for which the hydrophilic characteristic value specified based on a value representing the amount of adsorbed water vapor/the amount of adsorbed nitrogen is 0.02 or less.

2. An anode catalyst layer for a polymer electrolyte fuel cell, which comprises a carbon support on which a catalyst is carried and a hydrogen ion-conductive polyelectrolyte, and wherin the hydrophilic characteristic value specified based on a value representing the amount of adsorbed water vapor/the amount of adsorbed nitrogen is 0.30 or less for the carbon support on which a catalyst is carried.

3. The anode catalyst layer according to claim 1 or 2, wherein the carbon support on which a catalyst is to be carried is subjected to heat treatment at 800°C to 950°C.

4. A polymer electrolyte fuel cell having the anode catalyst layer according to any one of claims 1 to 3.
